(19) Europäisches Patentamt
European Patent Office
Office européen des brevets

(11) **EP 2 949 718 B1**

(12) **EUROPEAN PATENT SPECIFICATION**

(45) Date of publication and mention
of the grant of the patent:
**04.11.2020 Bulletin 2020/45**

(51) Int Cl.:
*C09J 7/22* (2018.01)      *C09J 7/38* (2018.01)
*C09J 169/00* (2006.01)    *C08J 5/18* (2006.01)

(21) Application number: **14844954.9**

(22) Date of filing: **05.09.2014**

(86) International application number:
**PCT/KR2014/008424**

(87) International publication number:
**WO 2015/037896 (19.03.2015 Gazette 2015/11)**

(54) **RESIN COMPOSITION INCLUDING POLYALKYLENE CARBONATE AND A SELF-ADHESIVE FILM PRODUCED THEREFROM**

HARZZUSAMMENSETZUNG MIT POLYALKYLENCARBONAT UND DARAUS HERGESTELLTER SELBSTKLEBENDER FILM

COMPOSITION DE RÉSINE COMPORTANT DU CARBONATE DE POLYALKYLÈNE ET FILM AUTOCOLLANT PRODUIT À PARTIR DE LADITE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2013 KR 20130108485**

(43) Date of publication of application:
**02.12.2015 Bulletin 2015/49**

(73) Proprietor: **LG Chem, Ltd.**
**Seoul 07336 (KR)**

(72) Inventors:
• **CHO, Hyun Ju**
  **Daejeon 305-738 (KR)**
• **PARK, Seung Young**
  **Daejeon 305-738 (KR)**
• **SEO, Jin Hwa**
  **Daejeon 305-738 (KR)**
• **KIM, Yoon Jung**
  **Daejeon 305-738 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2013/015522    WO-A1-2013/024980
JP-A- H08 217 868    KR-A- 20090 042 836
KR-A- 20090 052 344    KR-A- 20120 067 581
KR-B1- 0 148 235    US-A1- 2012 165 441
US-A1- 2013 075 666

**EP 2 949 718 B1**

**Description**

**[TECHNICAL FIELD]**

The present invention relates to a self-adhesive film including a polyalkylene carbonate, and the use thereof.

**[BACKGROUND OF ART]**

A self-adhesive film is a film that has adhesion by itself and is repeatedly attachable and detachable without a separate adhesive, and it is being widely used for advertising films, decorative films, protective films for electronic components, and so on.

Generally, polyethylene, polypropylene and ethylene vinyl acetate are used as a base resin for preparing such self-adhesive film, and a tackifier, or a plasticizer are added thereto for imparting adhesion and flexibility, to the film.

However, the self-adhesive film leaves residues (adhesive components, oils,) on the surface of the adherend in repeated attaching and detaching processes, and there is a concern about contaminating the adherend.

Furthermore, prior self-adhesive films have limits not only on securing sufficient adhesion strength but also on securing stable adhesion performance because their adhesion strength sharply varies according to ambient temperature and humidity.

WO 2013/015522A1 discloses a resin composition for a self-adhesive film including a polyalkylene carbonate, typically polypropylene carbonate.

The composition further comprises a plasticizer such as for example ethylene carbonate in an amount of 1-30 wt%. The polymer appears to have a Mw of 50000-300000 g/mol. The resin is formed as a sheet.

**[DETAILED DESCRIPTION OF THE INVENTION]**

**[Technical Problem]**

An aspect of the present invention provides a self-adhesive film which can exhibit excellent adhesion strength to various adherend materials, does not leave residues when using it repeatedly, and particularly can exhibit stable adhesive characteristics because its variation rate of adhesion strength depending on temperature and humidity conditions is low.

**[Technical Solution]**

According to the present invention, a self-adhesive film, prepared from a resin composition including 80 to 99 wt% of polyethylene carbonate and 1 to 20 wt% of ethylene carbonate;
wherein the polyethylene carbonate has a weight average molecular weight of 10,000 to 1,000,000 is provided.

According to the present invention, the self-adhesive film may show adhesion strength of 10 to 70 g/2.54 cm (1 inch) that is measured under the conditions of a temperature of $20 \pm 5$ °C and relative humidity of $50 \pm 2$ % according to a 180 degree peel test to a glass substrate.

Particularly the self-adhesive film may satisfy the relation of the following Equation 1.

$$[\text{Equation 1}]$$

$$|(A_0 - A_{85})/A_0| < 0.3$$

In Equation 1,
$A_0$ represents adhesion strength (g/2.54 cm (1 inch)) of the film that is measured at temperature of $20 \pm 5$ °C and relative humidity of $50 \pm 2$ % according to a 180 degree peel test to a glass substrate, and
$A_{85}$ represents adhesion strength (g/2.54 cm (1inch)) of the film that is measured under the same condition as $A_0$ according to a 180 degree peel test after aging the film attached on a glass substrate at a temperature of $85 \pm 5$ °C and relative humidity of $85 \pm 2$ % for 2 h.

The self-adhesive film may be used for protecting the surface of the adherend of a glass, metal, or plastic material.

**[ADVANTAGEOUS EFFECTS]**

The self-adhesive film according to the present invention can not only exhibit excellent adhesion strength to

2

various adherend materials, but also does not leave residues on the surface of the adherend when it is used repeatedly, and particularly can exhibit more stable adhesive characteristics in various environments because its variation rate of adhesion strength depending on the variation of temperature and humidity conditions is low.

Furthermore, the adhesion strength of the self-adhesive film can be controlled in a wider range and thus the film can be usefully used for protecting the surface of the adherend of various materials such as glass, metal, or plastic materials.

## [DETAILED DESCRIPTION OF THE EMBODIMENTS]

Hereinafter, a resin composition for self-adhesive film and a film prepared therefrom are explained.

Technical terms in the present specification are only for mentioning specific embodiments, and they are not intended to restrict the present invention unless there is no particular mention about them. And, singular expressions used here may include plural expressions unless they are differently expressed contextually.

The meaning of the term "include" used in the specification embodies specific characteristics, areas, essences, steps, actions, elements, or components, and does not exclude existence or addition of other specific characteristics, areas, essences, steps, actions, elements, components, and/or groups.

As a result of successive experiments by the present inventors, it was recognized that a film prepared from a resin composition including a polyethylene carbonate as a base resin and ethylene carbonate as a plasticizer can exhibit adhesion by itself without a separate tackifier.

In addition, since the resin composition shows excellent compatibility, the film prepared therefrom does not leave residues on the surface of the adherend. Particularly, it is recognized that the film prepared from the resin composition can exhibit more stable adhesive characteristics in various environments because its variation rate of adhesion strength depending on the variation of temperature and humidity conditions is low.

According to a result of research by the present inventors, since the resin composition including the polyethylene carbonate and ethylene carbonate as a plasticizer can show excellent adhesion strength, it is suitable to form a self-adhesive film for protecting an adherend surface of various materials such as a glass, metal, or plastic material.

Particularly, since a prior self-adhesive resin composition or film rapidly increases in adhesion strength in a high temperature environment (for example, 90 °C) and does not recover the adhesion power when it returns to a room temperature environment, there are problems of becoming unusable as an adhesive film and uneasy to handle it.

Particularly, a polyalkylene carbonate-based self-adhesive film has a problem of property deterioration such as a rapid decrease of adhesion strength because it shows a swelling phenomenon due to water permeation in a high temperature and high humidity environment. For example, such environment condition and the problem due to this may be realized in a container for transporting the resin composition or film.

By comparison, since the self-adhesive resin composition according to the embodiment of the invention includes the polyethylene carbonate and ethylene carbonate, the variation of adhesion strength can be minimized even when it is exposed to a high temperature and high humidity environment, and thus it can show more stable adhesion characteristics in various environments.

Furthermore, the polyethylene carbonate has an eco-friendly advantage because it is biodegradable and does not leave carbon residues by being completely degraded into carbon dioxide and water, differently from an aromatic polycarbonate which is a similar type of engineering plastic.

The polyethylene carbonate has a weight average molecular weight of about 10,000 to about 1,000,000, and preferably about 50,000 to about 500,000. When the polyethylene carbonate satisfies said degree of polymerization and weight average molecular weight, shaped articles prepared therefrom can show biodegradability in company with the mechanical property such as appropriate strength.

Meanwhile, the resin composition for a self-adhesive film according to the present invention includes ethylene carbonate as a plasticizer.

The plasticizer is included for improving wetting property of the resin composition and manifesting adhesion power. Particularly, according to the embodiment of the invention, ethylene carbonate is excellent in compatibility with the polyethylene carbonate and makes the film leave no residues on the surface of the adherend when the composition is made into a film. Furthermore, the adhesion strength of the composition can be easily controlled in a wider range according to the content of the same.

In this connection, a prior self-adhesive resin composition includes a tackifier such as a petroleum-based resin, a rosin-based resin, and the like in company with a base resin. However, such tackifier is not preferable because it is basically not compatible with the polyalkylene carbonate and is less effective in improving the wetting property, and residues may be left on the surface of the adherend.

Particularly, the resin composition includes ethylene carbonate, a unimolecule, as a plasticizer, and ethylene carbonate enables the composition to manifest excellent adhesion characteristics in comparison with other carbonate-based compounds (for example, propylene carbonate, polyalkylene carbonate with a low molecular weight, and so on).

In addition to the alkylene carbonate-based plasticizers, one or more compounds selected from the group consisting of dimethyl carbonate, diethyl carbonate, ethyl methyl carbonate, γ-butyrolactone, sulfolane, methyl acetate, and methyl propionate may be mixed therewith as a plasticizer. However, in order to manifest sufficient effects according to the addition of ethylene carbonate disclosed above, it is preferable that at least 70 wt% of the plasticizer included in the composition is ethylene carbonate.

According to the present invention, the resin composition includes 80 to 99 wt% of polyethylene carbonate and 1 to 20 wt% of ethylene carbonate.

That is, the content of ethylene carbonate in the composition may be 1 wt% or more, and preferably 3 wt% or more based on the entire weight of the composition, for sufficiently manifesting the effect of improving the adhesion characteristics of the resin composition according to the addition of ethylene carbonate, a plasticizer.

However, when the plasticizer is added in excess, the compatibility with the polyethylene carbonate may decrease, residues may be left on the adherend due to an excessive increase of adhesion power, and the mechanical properties of the film may deteriorate because the content of the base resin relatively decreases. Therefore, the content of ethylene carbonate in the composition may be 15 wt% or less, preferably 10 wt% or less, and more preferably 5 wt% or less, based on the entire weight of the composition.

Particularly, the self-adhesive film can show excellent adhesion strength because it is prepared from the resin composition.

Specifically, according to the embodiment of the present invention, the self-adhesive film may show adhesion strength of 10 g/2.54 cm (1 inch) or more that is measured under the conditions of a temperature of 20±5 °C and relative humidity of 50±2 % according to a 180 degree peel test to a glass substrate.

However, when the adhesion strength is too high, the function as an adhesive film may rather decrease because it is hard to peel off the film and residues are left on the surface of the adherend. In this regard, the self-adhesive film may show adhesion strength of 70 g/2.54 cm (1 inch) or less, 50 g/2.54 cm (1 inch) or less, 30 g/2.54 cm (1 inch) or less, or 15 g/2.54 cm (1 inch) or less in the peel test to exhibit excellent adhesion characteristics.

Furthermore, the self-adhesive film does not leave residues when it is repeatedly used, and particularly can exhibit the property satisfying the relation of the following Equation 1.

That is, as shown in Equation 1, the self-adhesive film according to the embodiment of the invention can show more stable adhesion characteristics in various environments because the absolute value of the variation rate of the adhesion strength according to the variation of temperature and humidity condition is as low as less than about 30 % (that is, $|(A_0 - A_{85})/A_0| < 0.3$), preferably less than 25 % (that is, $|(A_0 - A_{85})/A_0| \leq 0.25$) or 1 to 25 % (that is, $0.01 \leq |(A_0 - A_{85})/A_0| \leq 0.25$), more preferably 15 % or less (that is, $|(A_0 - A_{85})/A_0| \leq 0.15$) or 1 to 15 % (that is, $0.01 \leq |(A_0 - A_{85})/A_0| \leq 0.15$).

$$[\text{Equation 1}]$$

$$|(A_0 - A_{85})/A_0| < 0.3$$

In Equation 1,

$A_0$ represents adhesion strength (g/2.54 cm (1 inch)) of the film that is determined at a temperature of 20 ± 5 °C and relative humidity of 50 ± 2 % according to a 180 degree peel test to a glass substrate,

$A_{85}$ represents the adhesion strength (g/2.54 cm (1 inch)) of the film that is measured under the same condition as $A_0$ according to a 180 degree peel test after aging the film attached to a glass substrate at a temperature of 85 ± 5 °C and relative humidity of 85 ± 2 % for 2 h, and $|(A_0 - A_{85})/A_0|$ means the absolute value of the variation rate of the adhesion strength.

The method for preparing the self-adhesive film is not particularly limited, and common methods which can be applied for forming a film may be appropriately adopted. For example, the film may be obtained by a method of coating the resin composition on a substrate and drying the same. Further, the thickness of the self-adhesive film is not particularly limited and the film may be formed to have an appropriate thickness according to its purpose.

Such self-adhesive film may be used for protecting the surface of the adherend such as a glass, metal, or plastic material.

Hereinafter, preferable examples and comparative examples are presented for understanding the present invention. However, the following examples are only for illustrating the present invention and the present invention is not limited to or by them.

Example 1

A resin composition with a solid content of about 16 wt% was prepared by dissolving about 29.7 g of polyethylene carbonate (weight average molecular weight: 250,000) and about 0.3 g of ethylene carbonate in about 150 g of chloroform. A film of which the thickness was about 30 $\mu$m was prepared by casting the resin composition on a polyethylene terephthalate substrate and drying the same.

Example 2

A film with a thickness of about 30 $\mu$m was obtained substantially according to the same method as in Example 1, except that a resin composition including about 29.1 g of polyethylene carbonate and about 0.9 g of ethylene carbonate was used.

Example 3

A film with a thickness of about 30 $\mu$m was obtained substantially according to the same method as in Example 1, except that the resin composition including about 28.5 g of polyethylene carbonate and about 1.5 g of ethylene carbonate was used.

Comparative Example 1

A film with a thickness of about 30 $\mu$m was obtained substantially according to the same method as in Example 1, except that ethylene carbonate was not used and only the polyethylene carbonate (weight average molecular weight: 250,000) of Example 1 was used.

Comparative Example 2

A resin composition with a solid content of about 16 wt% was prepared by dissolving about 28.5 g of polyethylene carbonate (weight average molecular weight: 250,000) and about 1.5 g of propylene carbonate in about 150 g of chloroform. The film with thickness of about 30 $\mu$m was prepared by casting the resin composition on a polyethylene terephthalate substrate and drying the same.

Comparative Example 3

A resin composition with a solid content of about 16 wt% was prepared by dissolving about 28.5 g of polyethylene carbonate (weight average molecular weight: 250,000) and about 1.5 g of polyethylene carbonate (weight average molecular weight: 300) in about 150 g of chloroform. A film with a thickness of about 30 $\mu$m was prepared by casting the resin composition on a polyethylene terephthalate substrate and drying the same.

Experimental Example

The properties of the films obtained in the examples and comparative examples were tested by the following method, and the results are listed in the following Table 1.

(1) Initial adhesion strength ($A_0$, g/2.54 cm (1 inch)): after preparing specimens by attaching each film to a glass substrate, a 180 degree peel test was carried out under a constant temperature and humidity condition, the temperature being 23 °C and the relative humidity being 48 %, by using adhesion testing equipment (model name: TA-XT plus, manufacturer: Stable Micro System) for measuring the initial adhesion strength (g/2.54 cm (1 inch)).
(2) Adhesion strength after aging ($A_{85}$, g/2.54 cm (1 inch)): after preparing the same specimens as in said initial adhesion strength test, the specimens were aged under a constant temperature and humidity condition, the temperature being 85 °C and the relative humidity being 85 %. Subsequently, a 180 degree peel test was carried out under the constant temperature and humidity condition, at the temperature of 23 °C and the relative humidity of 48 %, by using adhesion testing equipment for measuring the adhesion strength (g/2.54 cm (1 inch)) after aging.

[Table 1]

|  | $A_0$ (g/2.54 cm (1 inch)) | $A_{85}$ (g/2.54 cm (1 inch)) | $|(A_0-A_{85})/A_0|$ |
|---|---|---|---|
| Example 1 | 12.5 | 16.0 | 0.28 |
| Example 2 | 13.0 | 15.2 | 0.17 |

(continued)

|  | $A_0$ (g/2.54 cm (1 inch)) | $A_{85}$ (g/2.54 cm (1 inch)) | $|(A_0-A_{85})/A_0|$ |
|---|---|---|---|
| Example 3 | 13.0 | 14.4 | 0.11 |
| Comparative Example 1 | 8.9 | 13.7 | 0.54 |
| Comparative Example 2 | 8.7 | 13.3 | 0.53 |
| Comparative Example 3 | 9.6 | 14.6 | 0.52 |

As shown in Table 1, the films of the examples showed initial adhesion strength of 10 g/2.54 cm (1 inch) or more, and it is recognized that they can secure 30 % or more improved initial adhesion strength than the films of the comparative examples.

Further, the case of Comparative Example 1 showed that the film was swelled by water permeation in the aging process, and it is recognized that the films of the comparative examples show apparently larger variation rates of adhesion strength after aging than the films of the examples and exhibit unstable adhesion characteristics according to the environment.

On the contrary, the films of the examples showed a variation rate of adhesion strength of less than 30 % while satisfying the relation of Equation 1, and it is recognized that the films can maintain the adhesion characteristics almost equivalent to the initial stage even after aging the same under high temperature and humidity conditions.

## Claims

1. A self-adhesive film, prepared from a resin composition including 80 to 99 wt% of polyethylene carbonate and 1 to 20 wt% of ethylene carbonate;
   wherein the polyethylene carbonate has a weight average molecular weight of 10,000 to 1,000,000.

2. Use of the self-adhesive film according to Claim 1 for protecting the surface of the adherend of glass, metal, or plastic material.

## Patentansprüche

1. Selbstklebender Film, hergestellt aus einer Harzzusammensetzung, die 80-99 Gewichtsprozent Polyethylencarbonat und 1-20 Gewichtsprozent Ethylencarbonat einschließt;
   wobei das Polyethylencarbonat ein Gewichtsmittelmolekulargewicht von 10.000 bis 1.000.000 aufweist.

2. Verwendung des selbstklebenden Films nach Anspruch 1 zum Schutz der Oberfläche der Klebefläche aus Glas, Metall oder Kunststoffmaterial.

## Revendications

1. Film auto-adhésif, préparé à partir d'une composition de résine incluant entre 80 et 99 % en poids de carbonate de polyéthylène et entre 1 et 20 % en poids de carbonate d'éthylène ;
   dans lequel le carbonate de polyéthylène a une masse moléculaire moyenne en poids comprise entre 10 000 et 1 000 000.

2. Utilisation du film auto-adhésif selon la revendication 1 pour protéger la surface de la partie adhérée de verre, métal ou matière plastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013015522 A1